(19) Europäisches Patentamt / European Patent Office / Office européen des brevets

(11) **EP 0 831 994 B2**

(12) **NEW EUROPEAN PATENT SPECIFICATION**
After opposition procedure

(45) Date of publication and mention
of the opposition decision:
**15.02.2012 Bulletin 2012/07**

(45) Mention of the grant of the patent:
**13.08.2003 Bulletin 2003/33**

(21) Application number: **96908798.0**

(22) Date of filing: **13.03.1996**

(51) Int Cl.:
***B32B 27/32*** (2006.01)   ***B29C 55/02*** (2006.01)
***B29C 61/00*** (2006.01)

(86) International application number:
**PCT/US1996/003448**

(87) International publication number:
**WO 1996/033864 (31.10.1996 Gazette 1996/48)**

(54) **Production of uniaxially shrinkable biaxially oriented polypropylene films**

Herstellung uniaxial schrumpfbarer, biaxial orientierter Polypropylenfilme

Fabrication de films de propylène à orientation biaxiale et à retrecissement uniaxial

(84) Designated Contracting States:
**BE DE ES FR GB IT NL**

(30) Priority: **25.04.1995 US 427785**

(43) Date of publication of application:
**01.04.1998 Bulletin 1998/14**

(73) Proprietor: **ExxonMobil Oil Corporation**
**Fairfax, VA 22037 (US)**

(72) Inventors:
• **KELLER, Lajos, E.**
**Strassen L-1445 (LU)**
• **NOTHNAGLE, Marie-France**
**Fairport, NY 14450 (US)**

(74) Representative: **Troch, Geneviève et al**
**ExxonMobil Chemical Europe Inc.**
**I.P. Law Shared Services**
**P.O. Box 105**
**Hermeslaan 2**
**1831 Machelen (BE)**

(56) References cited:
| | |
|---|---|
| **EP-A- 0 498 249** | **EP-A- 0 595 270** |
| **EP-A1- 0 595 270** | **EP-A2- 0 171 733** |
| **EP-A2- 0 498 249** | **EP-B1- 0 772 521** |
| **WO-A-96/07699** | **WO-A1-96/07699** |
| **WO-A1-96/33864** | **DE-A1- 4 030 385** |
| **JP-A- 55 103 931** | **US- - 08 276 124** |
| **US-A- 4 632 869** | **US-A- 5 072 493** |
| **US-A- 5 091 236** | **US-A- 5 292 561** |
| **US-B- 4 853 602** | |

• **'Kunststoffe 78', 1988, CARL HANSER VERLAG, MÜNCHEN article SEIFRIED, W.: 'Vergüten von Kunststoff-Folien durch Verstrecken', pages 948 - 951**
• **'Kunststoffe 82', 1992, CARL HANSER VERLAG, MÜNCHEN article PFEIFFER H. UND SCHLÖGL, G.: 'Hochschrumpfende Folien aus Polypropylen'**
• **'Grundseminar Kunststoff-Folien 04.05. - 07.05.1992', 03 April 1992, HOECHST AG, WIESBADEN**
• **BRÜCKNER MASCHINENBAU: 'Polypropylene '94 - Applications, Markets and Business Development', 1994, SIEGSDORF article KURTH, P.: 'BOPP MARKETS AND GROWTH - DEVELOPMENT IN TECHNOLOGY, Session VII, Speaker', pages 2-1 + - 2-19**
• **PRODUCT APPLICATION DUPONT: 'DuPont Stretches the Limits of Polyester Film Technology' PACKAGE PRINTING AND CONVERTING August 1994, page 93**
• **BRÜCKNER MASCHINENBAU GMBH: 'Specialty Plastic Films '98, Global Film Resins, Markets, Applications, 14th Annual World Congress, October 19 - 21 , 1998, Düsseldorf, Germany, Session V', October 1998, SIEGSDORF article BREIL, JÜRGEN, DR.-ING.: 'S-BOPP - FILM Enhancement by LISIM® Technology'**
• **BRÜCKNER MASCHINENBAU GMBH: 'Specialty Plastic Films '99, Global Film Resins, Markets, Applications, 15th Annual World Congress, December 13-14-15, 1999, Zürich, Switzerland, Session IV', 1999, BRÜCKNER MASCHINENBAU GMBH, SIEGSDORF article BREIL, JÜRGEN, DR.-ING.: 'New High-Grade S-BOPP and S-BOPET Film Types Produced with the Linear Motor Stretching Technology', pages 1 - 21**

- BRÜCKNER MASCHINENBAU GMBH: 'Speciality Plastic Films 2002, Global Film Markets and Developments, 18th Annual World Congress, October 29 - 30, 2002, Swissôtel Zürich, Switzerland, Session 2/2', 2002, BRÜCKNER MASCHINENBAU GMBH, SIEGSDORF article BREIL, JÜRGEN, DR.-ING.: 'Added Value Speciality Films Produced with Sequential and Simultaneous Stretching Lines', pages 1 - 32
- BRÜCKNER MASCHINENBAU GMBH, 2002 article BREIL. JÜRGEN, DR.: 'New Developments for Biaxially Stretched Polyolefin Films with Linear Motor Driven Simultaneous Stretching Technology'
- BRÜCKNER MASCHINENBAU GMBH: 'Speciality Plastic Films 2004, October 18 - 19, 2004', 2004 article BREIL. JÜRGEN, DR.: 'Speciality Oriented Films, New Market, New Applications, New Developments', pages 1 - 6
- BRÜCKNER MASCHINENBAU GMBH: 'Presentation at the International Conference Chicago, April 16, 1997', 1997 article BREIL, JÜRGEN, DR.: 'LISIM® Linear Motor Simultaneous Stretching Technology', pages 1 - 14

Remarks:

The file contains technical information submitted after the application was filed and not included in this specification

## Description

The present invention relates to the manufacture of a uniaxially heat-shrinkable, biaxially oriented, multilayer film having a polypropylene-containing core layer and at least one polyolefin-containing skin layer adjacent said core layer.

Accordingly the invention is directed to a method for preparing such a film as defined in claim 1. Preferred embodiments are covered by the dependent claims.

The composition of the polypropylene-containing core layer of the multilayer film of the present invention must provide sufficient operability so that the film after biaxial orientation exhibits crystallinity which is low enough to permit the secondary orientation of the film, which imparts the uniaxial shrinkability to the film, without tearing. The core layer material can be a single polypropylene homopolymer material which is sufficiently atactic and which has a specific melting point, as determined by the DSC (Differential Scanning Calorimetery) method, e.g., at a hearing rate of 2°C/minute. Alternately, the core layer material can comprise a blend of a more isotactic polypropylene with a modifier which reduces the crystallisation or crystallinity of the polypropylene by increasing chain imperfections or reducing isotacticity of the polypropylene-containing core. Preferred modifiers are polyolefin materials which are less crystallisable due to a higher degree of chain imperfections or lower isotacticity. Suitable DSC melting points for the core layer, blended or not, can be less than 160°C, e.g., less than 150°C, or even less than 140°C.

Modifiers suited to use in the present invention include polyolefins other than isotactic polypropylene. The modifier can be selected from the group consisting of atactic polypropylene, syndiotactic polypropylene, ethylene-propylene copolymer, propylene-butylene copolymer, ethylene-propylene-butylene terpolymer, polybutylene, and linear low density polyethylene.

Several ways have been found to provide a polypropylene core having a higher degree of chain imperfections and the desired post primary orientation crystallinity. The desired crystallinity avoids tearing of the biaxially oriented film during secondary orientation at stretch levels of greater than 30% or greater than 35%, e.g., up to 40% or even up to 45%. Isotactic polypropylene, i.e., polypropylene having less than 5% atacticity, say less than 3% atacticity, can be combined with a modifier, e.g., atactic polypropylene, to provide a suitable core layer. Atactic content can be measured by a polymer's insolubility in boiling n-hexane with chain imperfections being observed via NMR tests.

In one aspect of the present invention, the modifier, e.g., atactic polypropylene, is added to the core in amounts sufficient to provide a core layer having an overall atacticity greater than 2%, preferably greater than 4%, greater than 5% or greater than 6%, say, e.g., 6 to 15%. For present purposes, atactic polypropylene has an atacticity of at least 10%, preferably at least 15%, e.g., 15 to 20% or 15 to 25%. Atactic polypropylene can be used alone as the core or added to isotactic polypropylene in amounts such that the resulting mixture comprises 10 to 99 wt% atactic polypropylene, e.g., 10 to 30 wt%, preferably 15 to 20 wt%. atactic polypropylene. Blends of 15 wt% atactic polypropylene (15% atacticity) and 85 wt% isotactic polypropylene (of 4 to 5% atacticity) are especially preferred.

A suitable atactic polypropylene for use in the present invention has an atacticity of 15% which can be added to isotactic polypropylene to provide a core mixture containing 15 wt% atactic polypropylene thereby increasing overall core atacticity by 2.25 wt%.

Commercially available isotactic propylene suited to use in the present invention includes Fina 3371 from Fina Oil and Chemical Co., Chemical Div., Dallas, TX. Atactic polypropylenes which are commercially available include L1300 from Novolen of BASF Corp., Parsippany, NJ.

In another embodiment, the present invention employs a core layer which comprises polypropylene as described above, preferably isotactic polypropylene, mixed with polybutylene modifier to provide a core layer containing 2 to 15 wt% polybutylene, preferably 5 to 10 wt% polybutylene. Suitable polypropylene/polybutylene-1 homogeneous blends are described in U.S. Pat. 3,808,304, the disclosure of which is incorporated by reference herein. This disclosure teaches blends containing from 30 to 90 weight parts of polypropylene, and correspondingly, from 70 to 10 weight parts of polybutene-1. Suitable polybutylenes include PB 8430, available from Shell Chemical Co. of Houston, TX.

In yet another aspect of the invention, the core layer comprises polypropylene as described above, preferably isotactic polypropylene, mixed with ethylene-propylene copolymer modifier, e.g., 2 to 10 wt% ethylene-propylene copolymer, preferably 3 to 10 wt% E-P copolymer. Suitable E-P copolymer can contain from 2 to 7 weight percent ethylene, the balance being propylene. The copolymers can have a melt index at 230°C generally ranging from 2 to 15, preferably from 3 to 8. The crystalline melting point is usually from 125°C to 150°C, and the number average molecular weight is 25,000-100,000. The density is preferably from 0.89 to 0.92 g/cm$^3$. Suitable E-P copolymers include EP 8573, available from Fina Oil and Chemical Co., Chemical Div., Dallas, TX.

In still another aspect of the invention, the core layer is a blend of polypropylene as described above, preferably isotactic polypropylene, mixed with 0 to 10 wt% ethylene-propylene copolymer, said copolymer preferably being 50 to 100 wt% E-P copolymer which contains from 0.5 to 1 wt% ethylene, the balance being propylene. These fractional copolymers are commercially available as ready-mix resin containing 0.6 wt% ethylene (4173 from Fina).

In another aspect of the invention, the core layer is a blend of polypropylene as described above, preferably isotactic polypropylene, mixed with propylene-butylene copolymer. The core layer can comprise 5 to 20 wt% propylene-butylene copolymer, preferably 10 to 20 wt%. Suitable propylene-butylene copolymers include Cefor SRD4-105, and Cefor SRD4-104 available from Shell Cheaical Co. The core layer can comprise 5 to 20 wt% of said propylene-butylene copolymer as modifier.

In yet another aspect of the invention, the core layer is a blend of polypropylene as described above, preferably isotactic polypropylene, mixed with linear low density polyethylene (LLDPE). These polymers typically have a melt index of 1 to 10. The linear low density polyethylenes should have a density in the range 0.88-0.94g/cc, preferably, 0.89-0.92 g/cc. The linear low density polyethylenes may be derived from ethylene together with other higher comonomers such as butene-1, hexene-1 or octene-1. The core layer can comprise 2 to 15 wt% LLDPE, preferably 5 to 10 wt% LLDPE. Commercially available LLDPEs include Exact 2009, Exact 2010, and Exact 3016 available from Exxon Chemical Co.

In a particularly preferred embodiment, the core layer is a blend of polypropylene as described above, preferably isotactic polypropylene, mixed with syndiotactic polypropylene and, optionally, ethylene-propylene copolymer. Syndiotactic polypropylene can be present in the core layer in amounts ranging from 2 to 10 wt%, say, 4 to 8 wt%, preferably 4 to 6 wt%, with 0 to 40 wt% ethylene-propylene copolymer, preferably 0 to 20 wt% E-P copolymer. Suitable E-P copolymers are described above. The presence of E-P copolymer improves MD tensile strength in the secondary orientation step. However, E-P copolymer content must be carefully determined inasmuch as the presence of E-P copolymer can cause undesirable film elongation even at lower temperatures, e.g., 60°C (140°F) drying temperatures, which elongation can cause registration problems during converting processes such as printing.

The syndiotactic polypropylene used as a modifier in the present invention can possess an isotacticity of less than 15%, in particular less than 6%. The mean length of sequence $n_r$ of the syndiotactic sequences is preferably greater than 20, more preferably greater than 25. The molar mass distribution corresponds to the relation

$$M_w = k \times M_n,$$

where

     $M_w$ stands for the weight average of the molar mass distribution,
     $M_n$ stands for the number average of the molar mass distribution and
     k is a factor which is between 1 and 5, preferably between 2 and 3.

The weight average is preferably between 60,000 and 250,000, in particular between 90,000 and 160,000. The mean molar masses can be determined according to customary methods; of these, the method of gel permeation chromatography has proven to be particularly suitable.

Commercially available syndiotactic polypropylene resins suited to use in the present invention include EOD 9306 and EOD 9502 available from Fina.

In yet another aspect of the invention, the core layer is a blend of polypropylene as described above, preferably isotactic polypropylene, mixed with ethylene-propylene-butylene terpolymer as modifier. The core layer can comprise 5 to 20 wt% of the terpolymer. Suitable terpolymers include those containing 3 to 5 wt% ethylene and 3 to 6 wt% butylene. Such terpolymers are available from Chisso, under the tradename Chisso 7700 Series. Other suitable ethylene-propylene-butylene terpolymers include those containing 0.5 to 3 wt% ethylene, and 13 to 20 wt% butylene. Such terpolymers are available from Chisso, under the tradename Chisso 7800 series.

Suitable core layers of the present invention can comprise recycled polypropylene (RPP), e.g., up to 25 wt% RPP, preferably up to 15 wt%. RPP.

The core layer of the present invention may also comprise a plurality of voids farmed by cavitation about a solid cavitation agent. Polybutylene terephthalate, e.g., in amounts comprising 4 to 8 wt% of the core layer, well-dispersed as fine spherical particles, e.g., 0.2 to 2 microns in diameter, as described in U.S. Patents 5,288,548, 5,267,277 and U.S. Pat. 4,632,869, the contents of which are incorporated herein by reference, is a suitable cavitation agent. The spherical particles form microvoids on orientation, resulting in a white opaque product. Such a core layer can further comprise a supporting layer of polypropylene on one or both sides of the core with at least one of said layers containing 4 to 15 wt% $TiO_2$. Further description of such use of $TiO_2$-containing layers is found in U.S. Pat. 5,091,236, the contents of which are incorporated herein by reference. Incorporation of skin layers over the supporting layers serves to encapsulate the abrasive $TiO_2$ and provides a highly opaque, five layer structure. The multilayer film has improved functionality for printing, metallizing, adhesives, coatings, and heat sealability. Alternatively, clear five layer structures can be prepared by substituting a supporting layer of polypropylene on both sides of the core, which layer does not contain opacifying materials.

The opacity and low light transmission of the film may be enhanced by the addition to the core layer itself of from 1% by weight and up to 10% by weight of opacifying compounds, which are added to the melt mixture of the core layer before extrusion. Opacifying compounds which may be used include iron oxides, carbon black, graphite, aluminum, $TiO_2$, and talc.

A 30 micron polygage, clear film equivalent, white opaque film described above will have a density of 0.6 to 0.75 g/cc, an optical-cavitated thickness gauge of 36 to 45 microns and light transmission of 15 to 25% depending on percentage of PBT dispersed and the orientation conditions, including the extent of stretching as well as MD and TD orientation temperatures.

The aforementioned blends of propylene and other constituents noted above may be admixed by any suitable means to form a homogeneous blend, such as dry mixing, solution mixing, or mixing the two polymers together while in a molten state or combinations thereof.

Skin Layer

The polyolefin-containing skin layer of the present invention may be any of the coextrudable, biaxially orientable heat shrinkable film-forming resins known in the prior art. Such materials include those discussed above which are suited to use in the core layer, including isotactic polypropylene, atactic polypropylene, polypropylene blended with polybutylene, propylene-butylene copolymer, and ethylene-propylene copolymer, including fractional E-P copolymer. In addition, polyethylene or ethylene-propylene-butylene terpolymer may be employed as the skin layer. Ethylene-propylene-butylene random terpolymers suited to use in the skin layers of the present invention include those containing 1 - 5 weight percent random ethylene, 10 - 25 weight percent random butylene. The amounts of the random ethylene and butylene components in these copolymers are typically in the range of 10 to 25 percent total (ethylene plus butylene). Typical terpolymers of this type include those with 1 - 5 percent ethylene and 10 - 25 percent butylene.

These copolymers typically have a melt flow rate in the range of 5 to 10 with a density of 0.9 and a melting point in the range of 115° to 130°C.

In one aspect of the invention the skin layer is derived from a linear low density polyethylene (LLDPE). These polymers typically have a melt index of 1 to 10. The linear low density polyethylenes may have a density as high as 0.94, usually in the range 0.90 - 0.91, e.g., 0.92 or 0.91, with a melt index from 1 to 10. The linear low density polyethylenes may be derived from ethylene together with other higher comonomers such as butene-1, hexene-1 or octene-1.

Each skin layer adjacent to the core layer can range in thickness from 0.5 to 3 microns (.02 to .12 mil), preferably 0.5 to 1.0 micron (.02 to .04 mil), e.g., 0.5 to 0.75 micron (.02 to .03 mil).

Prior to incorporation in the film, e.g., before extrusion, at least one of the skin layers can be compounded with an anti-blocking effective amount of an anti-blocking agent, e.g., silica, clays, talc, glass, and the like which are preferably provided in the form of approximately spheroidal particles. The major proportion of these particles, for example, anywhere from more than half to as high as 90 weight percent or more, will be of such a size that significant portion of their surface area, for example, from 10 to 70 percent thereof, will extend beyond the exposed surface of the skin layer. In a preferred embodiment, the anti-blocking agent comprises non-meltable silicone resin, e.g., particulate cross-linked hydrocarbyl-substituted polysiloxanes. Particularly preferred particulate cross-linked hydrocarbyl-substituted polysiloxanes include the polymonoalkylsiloxanes. Most particularly preferred are non-meltable polymonoalkylsiloxanes characterized as having a mean particle size of 0.5 to 20.0 microns and a three dimensional structure of siloxane linkages. Such materials are available from Toshiba Silicone Co., Ltd., worldwide, and in the United States from General Electric Co., and are marketed under the tradename Tospearl. Other commercial sources of similar suitable materials are also known to exist. Such materials are further described as non-meltable crosslinked organosiloxane resin powders in U.S. Patent 4,769,418. Effective amounts of the particulate cross-linked hydrocarbyl-substituted polysiloxane anti-blocking agent can range from 100 to 5000 ppm, preferably 1000 to 3000 ppm, say, from 2500 to 3000 ppm, based on loading of the resin from which the upper layer (c) is prepared.

Reduced coefficient of friction and reduced antistatic characteristics at the surface of the skin layer or layers can be achieved in accordance with the disclosure set out in U.S. Pat. 5,264,277, which discloses the use of migratory slip agents and antistatic agents in multilayer films. Reduced COP may also be obtained by treating one or both skins with 2000 to 15000 ppm silicone oil.

If desired, the exposed surface of the skin layer or skin layers can be treated in a known and conventional manner, e.g., by corona discharge to improve its receptivity to printing inks, coatings, adhesive anchorage, and/or its suitability for such subsequent manufacturing operations as lamination.

All layers of the multilayer film structures of the present invention are coextruded, after which the film is biaxially oriented (primary orientation) and thereafter secondarily oriented in machine direction in which shrinkability is desired. Coextrusion can be carried out in a multilayer melt form through a flat die.

The multilayer coextrudate film is primarily oriented biaxially.

The films are prepared by orienting on a line which utilises linear motors to directly propel opposed pairs of tenter clips synchronously whereby primary orienting by simultaneous biaxial orienting is effected by accelerating along a diverging path directly opposed pairs of tenter clips holding the film. In other words, the film can be primarily oriented by synchronously accelerating along a diverging path, directly opposed pairs of tenter clips holding the film.

Secondary machine direction orientation on the same line is effected along a parallel path subsequent to the diverging path by simultaneously accelerating the directly opposed pairs of tenter clips along some portion of the parallel path. In other words, the film is secondarily oriented by synchronously accelerating along a straight path, directly opposed pairs of tenter clips holding the film.

The film can be further stabilised by heat setting and annealing and subsequent cooling before leaving the tenter frame such that the resulting film will have good machine direction stability at temperatures less than 100°C and shrinkage at 25% or more at 135°C or greater in the machine direction and good TD direction stability at 135°C or below, e.g., less than 5%.

The use of linear motors to directly propel tenter clips to effect simultaneous biaxial stretching is further disclosed in US Pat No 4,853,602 to Hommes, et al.

The resulting uniaxially shrinkable film after secondary orientation can range in thickness from 10 to 60 microns, (0.4 to 2.4 mils), preferably 20 to 40 microns (0.8 to 1.6 mils).

The heat-shrinkable polyolefin films may have a secondary machine direction (MD) stretch of up to 40%, with recovery upon the application of heat (i.e., machine direction shrinkage) of at least 25% at 135°C, with 0 ± 1% dimensional change in the transverse direction (TD).

Dimensional Stability

The resulting uniaxially shrinkable film after secondary orientation exhibits at 135°C greater than 15%, preferably greater than 18%, 20%, or even greater than 25% shrinkage in the direction of secondary orientation, e.g., machine direction. Shrinkage is determined by measuring the difference of sample length before and after placing the sample, unrestrained, in a 135°C oven for 7 minutes.

Shrinkage in the direction of secondary orientation preferably occurs with minimal variation in the direction normal to said secondary orientation, e.g., transverse direction. Such variation or stability can be described in terms of the change in length of the multilayer film in the direction normal to the secondary orientation and can include both expansion and shrinkage as a percentage of the dimension prior to heat exposure. The present invention's films exhibit ±5% stability, preferably ±3% stability, or even ±1% stability in the direction normal to that of secondary orientation. Stability of ±5% means that the dimension of the film normal to the direction of secondary orientation, after heating to 135°C (275°F) shrinks or expands no greater than 5% of the original dimension of the film at room temperature.

Elongation at Lower Temperatures

Another parameter of interest is the resistance to stretching or dimensional stability of the film after secondary orientation in the direction of secondary orientation (% elongation) under common processing conditions, e.g., print drying temperatures of 54° to 66°C (130° to 150°F), preferably 60°C (140°F). It is desirable to provide a uniaxially shrinkable film which is resistant to elongation under the tensions 17.8 to 178 g per cm (0.10 to 1.0 pli (pounds per linear inch)), preferably 134 g per linear cm (0.75 pli), and temperatures normally encountered by the film during processes prior to thermoshrinking, e.g., drying after printing. To avoid registration problems during printing, MD elongation at 134 g per linear cm (0.75 pli) should be less than 0.6% at 60°C (140°F), preferably less than 0.4%. MD elongation is generally reduced and is thus less of a problem as secondary stretching (MD orientation) is increased.

Especially preferred films of the present invention show minimal MD elongation and TD shrinkage at processing temperatures of 60°C and 134 g/cm (0.75 pli), and maximum MD shrinkage at temperatures used to effect shrinkage, e.g., heat tunnel temperatures of 127° to 141°C (260° to 285°F), preferably 135°C (275°F) or higher, depending on residence time.

There is detailed description in WO96/33864 and WO96/02386 of polymer blends which may be used for the core in the invention and of results achieved when uniaxially heat shrinkable films are made using a different process of orienting the films and in particular the examples show skin layers formed of ethylene propylene copolymer or ethylene propylene butylene terpolymer.

Claims

1. A method for preparing a uniaxially heat shrinkable, biaxially oriented, multilayer film having a polypropylene-containing core layer having a melting point (as determined by Differential Scanning Calorimetery at heating rate of 2°C/minute) of less than 160°C and at least one polyolefin-containing skin layer adjacent the core layer, wherein the method comprises coextruding the core layer and the skin layer to provide a coextrudate, biaxially orienting the coextrudate and reorienting the biaxially oriented coextrudate and wherein the core layer is formed of a single atactic homopolymer material or a blend of isotactic polypropylene with modifier which reduces the crystallisation or crystallinity of the polypropylene by increasing chain imperfections or reducing isotacticity of the polypropylene-containing core, whereby the film after biaxial orientation has sufficiently low crystallinity to permit the reorientation without tearing, **characterized in that**

   the biaxial orientation is conducted by orienting the film on a line which utilises linear motors to directly propel opposed pairs of tenter clips synchronously whereby primary orienting by simultaneous biaxial orienting is effected by accelerating along a diverging path directly opposed pairs of tenter clips holding the film,

   the reorientation of the biaxially oriented coextrudate in machine direction at a stretch level of greater than 30% is effected on the same line along a parallel path subsequent to the diverging path by simultaneously accelerating the directly opposed pairs of tenter clips along some portion of the parallel path, and the resulting film has a shrinkage of greater than 15% at 135°C in the direction of reorientation and stability of ± 5% in the direction normal to the direction of reorientation.

2. A method according to claim 1 in which the core layer comprises isotactic polypropylene and a modifier which is a polyolefin other than isotactic polypropylene.

3. A method according to any preceding claim in which the core comprises a plurality of voids formed by cavitation about a solid cavitation agent during the orientation.

4. A method according to any preceding claim in which the film has a skin layer which is a heat sealing layer.

5. A method according to any preceding claim in which the film has a skin layer which is a layer of ethylene propylene copolymer or of ethylene propylene butylene terpolymer.

**Patentansprüche**

1. Verfahren zur Herstellung einer uniaxial wärmeschrumpfbaren, biaxial orientierten, mehrschichtigen Folie mit einer Polypropylen enthaltenden Kernschicht mit einem Schmelzpunkt (durch Kalorimetrie mit Differentialabtastung bei einer Erwärmungsrate von 2°C/min bestimmt) von weniger als 160°C und mindestens einer Polyolefin enthaltenden Hautschicht, die an die Kernschicht angrenzt, wobei das Verfahren das Coextrudieren der Kernschicht und der Hautschicht, wodurch ein Coextrudat bereitgestellt wird, das biaxiale Orientieren des Coextrudats und das erneute Orientieren des biaxial orientierten Coextrudats umfasst und wobei die Kernschicht aus einem einzigen ataktischen Homopolymermaterial oder einem Gemisch aus isotaktischem Polypropylen mit Modifikationsmittel hergestellt wird, das das Kristallisieren oder die Kristallinität des Polypropylens vermindert, indem Unregelmäßigkeiten der Kette verstärkt oder die Isotaktizität des Polypropylen enthaltenden Kerns verringert wird, wodurch die Folie nach dem biaxilien Orientieren eine ausreichend geringe Kristallinität aufweist, um das erneute Orientieren ohne Reißen zu ermöglichen, **dadurch gekennzeichnet, dass**
das biaxiale Orientieren durchgeführt wird, indem die Folie auf einer Anlage orientiert wird, die Linearmotoren verwendet, um entgegengesetzte Paare von Klemmeinrichtungen einer Spannvorrichtung synchron anzutreiben, wodurch das primäre Orientieren durch simultanes biaxiales Orientieren bewirkt wird, indem direkt gegenüberliegende Paare von Klemmeinrichtungen der Spannvorrichtung, die die Folie halten, entlang eines divergierenden Weges beschleunigt werden,
das erneute Orientieren des biaxial orientierten Coextrudats in Maschinenrichtung bei einem Reckwert von mehr als 30% auf der gleichen Anlage entlang eines parallelen Wegs im Anschluss an den divergierenden Weg vorgenommen wird, indem die direkt gegenüberliegenden Paare der Klemmeinrichtungen der Spannvorrichtung entlang eines gewissen Teils des parallelen Weges gleichzeitig beschleunigt werden, und
die resultierende Folie eine Schrumpfung von mehr als 15% bei 135°C in Richtung der erneuten Orientierung und eine Stabilität von ± 5% in der zur Richtung der erneuten Orientierung senkrechten Richtung aufweist.

2. Verfahren nach Anspruch 1, bei dem die Kernschicht isotaktisches Polypropylen und ein Modifikationsmittel umfasst, das ein von isotaktischem Polypropylen verschiedenes Polyolefin ist.

3. Verfahren nach einem der vorangehenden Ansprüche, bei dem der Kern eine Vielzahl von Hohlräumen umfasst, die beim Orientieren durch Hohlraumbildung um ein festes Hohlraum bildendes Mittel gebildet werden.

4. Verfahren nach einem der vorangehenden Ansprüche, bei dem die Folie eine Hautschicht aufweist, die eine Heißsiegelschicht ist.

5. Verfahren nach einem der vorangehenden Ansprüche, bei dem die Folie eine Hautschicht aufweist, die eine Schicht aus einem Ethylen-Propylen-Copolymer oder einem Ethylen-Propylen-Butylen-Terpolymer ist.

**Revendications**

1. Procédé de préparation d'un film multi-couche à orientation biaxiale, thermo-rétrécissable de façon uniaxiale, ayant une couche centrale contenant du polypropylène, avec un point de fusion (comme déterminé par la Calorimétrie par analyse différentielle à une vitesse de chauffage de 2°C/minute) de moins de 160°C et au moins une couche superficielle contenant de la polyoléfine, adjacente à la couche centrale, dans lequel le procédé comprend la co-extrusion de la couche centrale et de la couche superficielle pour fournir un produit de co-extrusion, en orientant biaxialement le produit de co-extrusion, et en réorientant le produit de co-extrusion orienté biaxialement et dans lequel la couche centrale est formée d'un matériau homopolymère atactique simple ou d'un mélange de polypropylène isotactique avec un modificateur qui réduit la cristallisation ou la cristallinité du polypropylène en augmentant les imperfections de chaîne ou en réduisant l'isotacticité du noyau contenant du polypropylène, moyennant quoi le film, après orientation biaxiale, présente une cristallinité suffisamment faible pour permettre la réorientation sans déchirement, **caractérisé en ce que** l'orientation biaxiale est réalisée en orientant le film sur une ligne qui utilise des moteurs linéaires pour pousser directement des paires opposées de crampons, de façon synchrone, moyennant quoi l'orientation primaire par orientation biaxiale simultanée est réalisée en accélérant, le long d'une trajectoire divergente, les paires directement opposées de crampons qui tiennent le film, la réorientation du produit de co-extrusion orienté de façon biaxiale dans le sens machine à un degré d'allongement supérieur à 30% est effectuée sur la même ligne, le long d'une trajectoire parallèle suivant la trajectoire divergente en accélérant simultanément les paires directement opposées de crampons, le long d'une certaine portion de la trajectoire parallèle, et le film obtenu présente un rétrécissement supérieur à 15% à 135°C dans le sens de la réorientation et une stabilité de $\pm$ 5% perpendiculairement au sens de la réorientation.

2. Procédé selon la revendication 1, dans lequel la couche centrale comprend du polypropylène isotactique et un modificateur qui est une polyoléfine autre que le polypropylène isotactique.

3. Procédé selon l'une quelconque des revendications précédentes, dans lequel le noyau comprend plusieurs vides formés par une cavitation autour d'un agent de cavitation solide pendant l'orientation.

4. Procédé selon l'une quelconque des revendications précédentes, dans lequel le film a une couche superficielle qui est une couche thermosoudable.

5. Procédé selon l'une quelconque des revendications précédentes, dans lequel le film a une couche superficielle qui est une couche de copolymère d'éthylène-propylène ou de terpolymère d'éthylène-propylène-butylène.

**EP 0 831 994 B2**

**REFERENCES CITED IN THE DESCRIPTION**

**Patent documents cited in the description**

- US 3808304 A
- EP 8573 A
- US 5288548 A
- US 5267277 A
- US 4632869 A
- US 5091236 A
- US 4769418 A
- US 5264277 A
- US 4853602 A
- WO 9633864 A
- WO 9602386 A